# EUROPEAN PATENT APPLICATION

(11) **EP 4 725 805 A1**
(43) Date of publication of application: **15.04.2026**
(21) Application number: 25206832.5
(22) Date of filing: 06.10.2025
(51) Int. Cl.: B62D 25/08, B62D 25/20, B60K 1/00

(54) **VEHICLE REAR STRUCTURE**

(30) Priority: 10.10.2024 JP 2024178295
(71) Applicant: Suzuki Motor Corporation, Shizuoka 432-8611 (JP)
(72) Inventor: ARAI, Hayato, Hamamatsu-shi, 432-8611 (JP)
(74) Representative: Haseltine Lake Kempner LLP

(57) **Abstract**

[Problem to be Solved] Vibration transmitted into a vehicle compartment by the driving of an electric motor in a vehicle rear portion is reduced.

[Solution] A vehicle rear structure includes a left side member 20, a right side member 30, a first cross member 40, and a second cross member 45, opening portions 12a, 12b are provided in a rear floor panel 10 surrounded by the left side member 20, the right side member 30, the first cross member 40, and the second cross member 45, a center member 50 extending in the vehicle front-rear direction so as to stride over the opening portions 12a, 12b and joined to the first cross member 40 and the second cross member 45 is included, an electric motor 2 is disposed in the opening portion 12a between the left side member 20 and the center member 50, and a lead battery is disposed in the opening portion 12b between the right side member 30 and the center member 50.

## Description

### [Technical Field]

The present invention relates to vehicle rear structures.

### [Background Art]

As disclosed in Patent Literature 1, for example, an electric vehicle has a battery pack disposed below a floor panel constituting a floor portion of the vehicle. In order to extend the cruising distance of the electric vehicle, the capacity of the battery pack is desired to be increased. As a result, the battery pack tends to be increased in size. As the battery pack is increased in size, the proportion taken up by the battery pack in a space below the floor portion increases.

In this example, an electric motor for driving is disposed on the vehicle front side of the battery pack. For example, in a vehicle in which a power compartment is provided in a vehicle front portion, a vehicle compartment and the power compartment are divided by a dash panel or the like. In addition, the electric motor is supported by a motor frame or the like having high rigidity, and cases in which the vibration of the electric motor is transmitted to the vehicle compartment are reduced.

### [Citation List]

### [Patent Literature]

[Patent Literature 1] JP 2021-104759 A

### [Summary of Invention]

### [Problem to be Solved by the Invention]

However, in a vehicle having a specification in which a space on the front side relative to a vehicle compartment is small, an electric motor may be disposed on the rear side of a battery pack. Vehicles in which a passenger compartment and a luggage compartment are integrally configured such as a commercial vehicle are also known. In such a vehicle, when an electric motor is to be disposed in a vehicle rear portion, the electric motor is disposed below a floor panel constituting a floor portion of the luggage compartment, for example.

The electric motor is an apparatus that has a predetermined weight, and the electric motor is attached to vehicle-body frame members such as a side member and a cross member of the vehicle rear portion via support brackets. However, in a vehicle in which the passenger compartment and the luggage compartment are integrally formed, there is a possibility that vibration and the like of the electric motor disposed below the floor panel will be transmitted to the vehicle compartment.

Therefore, regarding the structure of the example described above, there has been room for improvement in terms of reducing the transmission of vibration into the vehicle compartment via the floor portion in the vehicle rear portion in the vehicle in which the electric motor is disposed below the floor portion.

The present invention has been made in order to solve the problem described above, and an object thereof is to provide a vehicle rear structure capable of reducing vibration transmitted into a vehicle compartment by the driving of an electric motor disposed in a vehicle rear portion.

### [Means for Solving the Problem]

A vehicle rear structure according to the present invention for achieving the object described above includes a floor panel disposed in a vehicle rear portion, a first side member and a second side member disposed so as to form a pair on both of vehicle-width-direction side portions of the floor panel and extending in the vehicle front-rear direction, a first cross member extending in the vehicle width direction so as to connect the first side member and the second side member to each other, and a second cross member disposed on a vehicle rear side of the first cross member and extending in the vehicle width direction so as to connect the first side member and the second side member to each other. In the vehicle rear structure, an opening portion is provided in the rear floor panel surrounded by the first side member, the second side member, the first cross member, and the second cross member, a center member extending in the vehicle front-rear direction so as to bridge over the opening portion and joined to the first cross member and the second cross member is included, a lead battery is disposed in the opening portion between the first side member and the center member, and an electric motor is disposed in the opening portion between the second side member and the center member.

### [Advantageous Effect of Invention]

According to the present invention, it becomes possible to reduce the vibration transmitted into the vehicle compartment by the driving of the electric motor disposed in the vehicle rear portion.

### [Brief Description of Drawings]

[Figure 1] Figure 1 is a schematic perspective view of one embodiment of a vehicle rear structure according to the present invention seen from the vehicle lower side.
[Figure 2] Figure 2 is a schematic perspective view of a rear floor panel in Figure 1.
[Figure 3] Figure 3 is a perspective view enlarging a battery tray in Figure 1 and the periphery thereof and virtually showing a member main body of a center member.
[Figure 4] Figure 4 is a perspective view enlarging the battery tray in Figure 1 and the periphery thereof and virtually showing a rear-side extension member and a towing hook bracket.
[Figure 5] Figure 5 is a schematic end view seen from arrows A-A in Figure 4.
[Figure 6] Figure 6 is a perspective view of the battery tray and the like in Figure 1 seen from the vehicle outer side in a manner in which an extension member is omitted.
[Figure 7] Figure 7 is a perspective view of the rear structure in Figure 1 seen from the vehicle upper side.
[Figure 8] Figure 8 is a schematic perspective view shown in a manner in which the rear floor panel in Figure 7 is omitted.

### [Mode for Carrying Out the Invention]

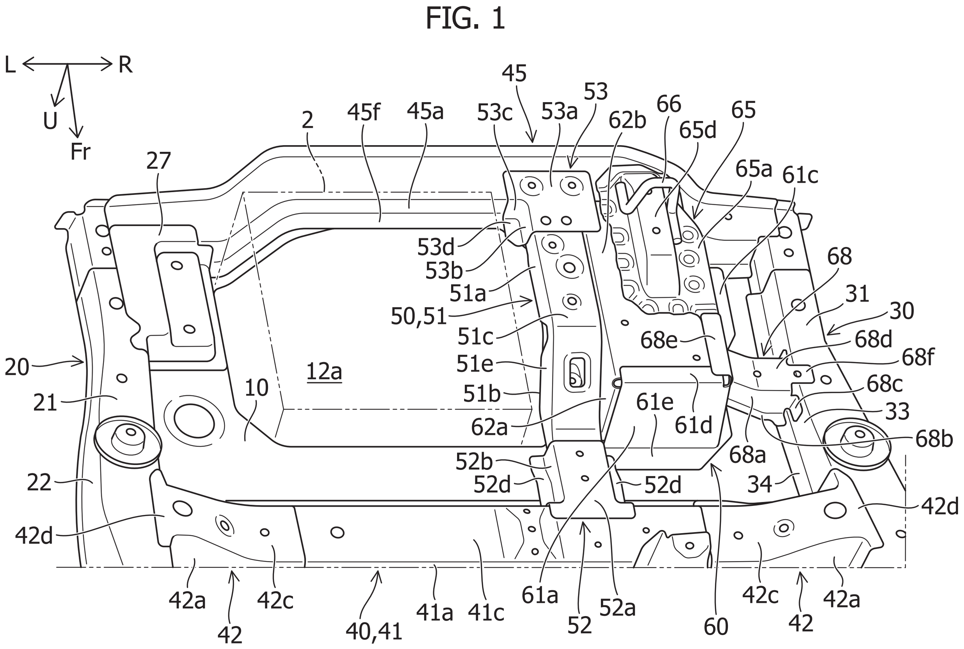

One embodiment of a vehicle rear structure according to the present invention is described below with reference to the drawings (Figure 1 to Figure 8). In the drawings, the direction of an arrow Fr indicates the front side in the vehicle front-rear direction. "A front portion (front end) and a rear portion (rear end)" in the description of the embodiment correspond to a front portion and a rear portion in the vehicle front-rear direction. An arrow R and an arrow L indicate the right side and the left side when an occupant views the vehicle front side. An arrow U indicates the upper side in the vehicle up-down direction.

As shown in Figure 1, the vehicle rear structure of the present embodiment has a rear floor panel 10 (floor panel) disposed in a vehicle rear portion, and a right side member 30 (first side member) and a left side member 20 (second side member) that are disposed so as to form a pair on both vehicle-width-direction side portions of the rear floor panel 10 and that extend in the vehicle front-rear direction. The rear structure further has a first cross member 40 that extends in the vehicle width direction so as to connect the left and right side members 20, 30 to each other, and a second cross member 45 that is disposed on the vehicle rear side of the first cross member 40 and that extends in the vehicle width direction so as to connect the left and right side members 20, 30 to each other.

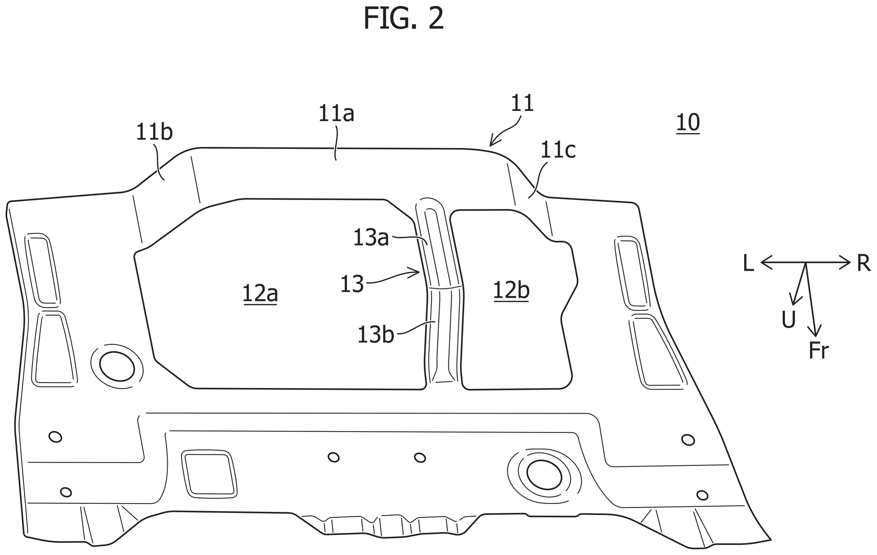

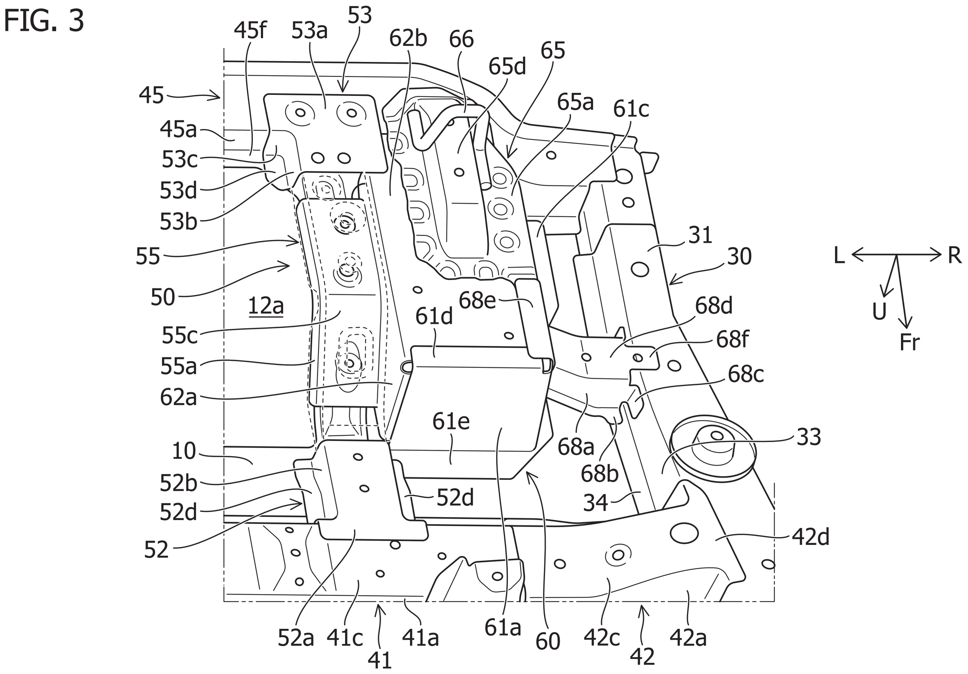

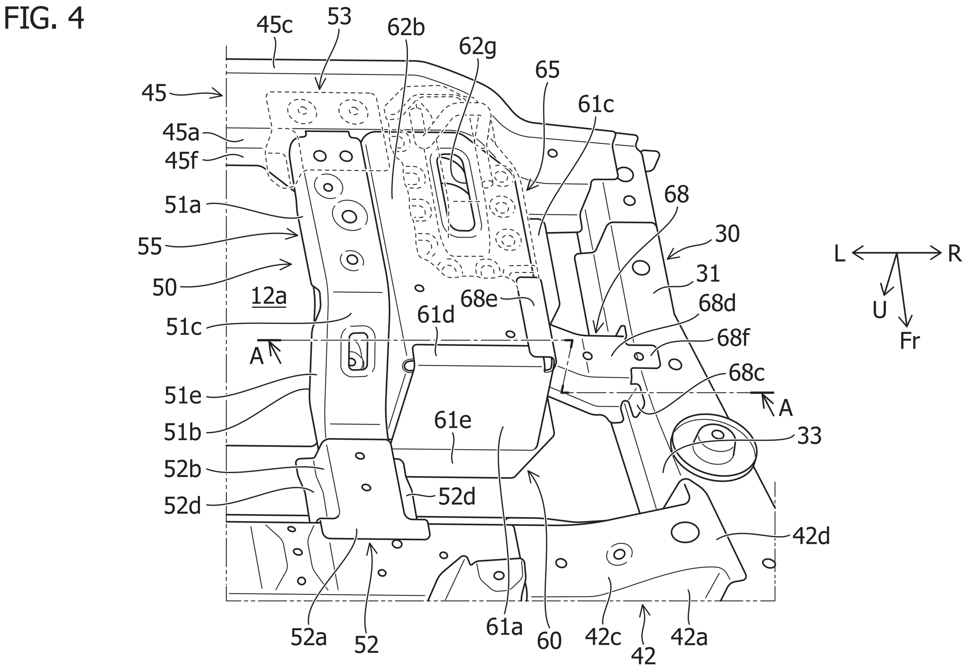

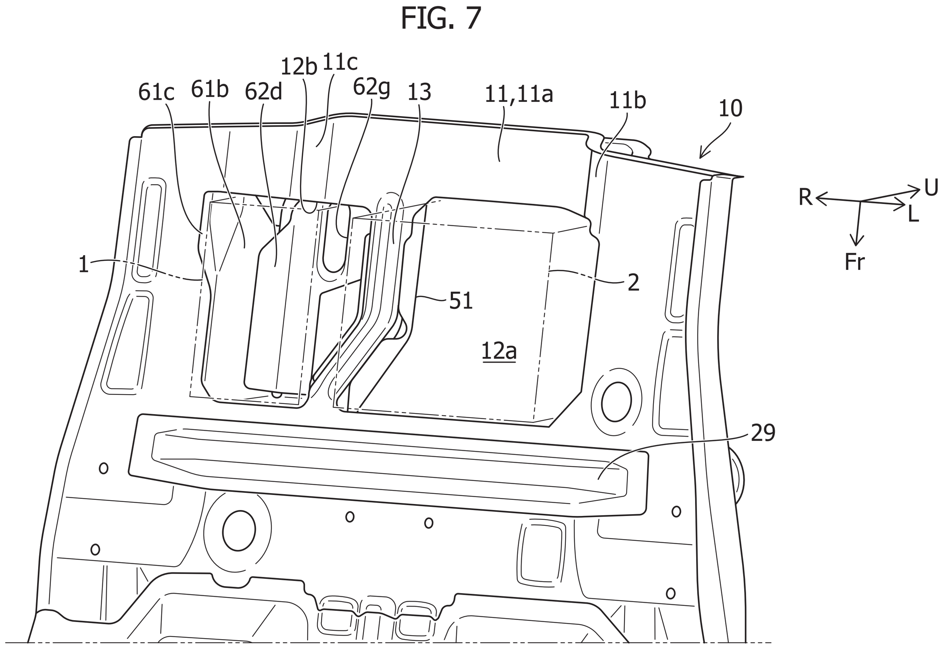

In the rear structure of the present embodiment, a left-side opening portion 12a and a right-side opening portion 12b are provided in the rear floor panel 10 surrounded by the left side member 20, the right side member 30, the first cross member 40, and the second cross member 45 (Figure 2). In addition, flanges protruding to the vehicle upper side and extending in the vehicle front-rear direction are provided on vehicle-width-direction outer side portions of the rear floor panel 10. The rear structure of the present embodiment has a center member 50 that extends in the vehicle front-rear direction so as to bridge over the opening portions 12a, 12b and that is joined to the first cross member 40 and the second cross member 45. As shown in Figure 1 and Figure 7, an electric motor 2 for driving is disposed in the left-side opening portion 12a between the left side member 20 and the center member 50. As shown in Figure 1 and Figure 7, a lead battery 1 is disposed in the right-side opening portion 12b between the right side member 30 and the center member 50. The lead battery 1 is fixed to a battery tray 60. As shown in Figure 3 and Figure 4, the battery tray 60 is disposed between the center member 50 and the right side member 30 and is joined to the center member 50 and the second cross member 45. The vehicle rear structure is described in detail below.

First, the rear floor panel 10 is described. As shown in Figure 1 and Figure 2, the rear floor panel 10 is a panel disposed in the vehicle rear portion, and the left side member 20 and the right side member 30 are joined to vehicle-width-direction outer side portions in a lower surface of the rear floor panel 10. The first cross member 40 is joined to a front portion of the rear floor panel 10, and the second cross member 45 is joined to a rear portion of the rear floor panel 10. As shown in Figure 2, the opening portions 12a, 12b are provided in the rear floor panel 10 as described above. In a vehicle-width-direction intermediate portion in the opening portions 12a, 12b, a partition portion 13 extending in the vehicle front-rear direction so as to form a bridge over the opening portions 12a, 12b in the front-rear direction is provided, and the left-side opening portion 12a and the right-side opening portion 12b are configured. The shape of the partition portion 13 is described later.

As shown in Figure 2, a recessed-shape portion 11 recessed downward is provided in the vehicle-width-direction intermediate portion in the rear portion of the rear floor panel 10 of the present embodiment. The recessed-shape portion 11 has a bottom surface portion 11a, a left inclined wall portion 11b, and a right inclined wall portion 11c. The bottom surface portion 11a is a part that is disposed on the lower side relative to the lower surface located in the vehicle-width-direction outer side portions of the rear floor panel 10 and that extends in the vehicle width direction.

The left inclined wall portion 11b is inclined downward as the left inclined wall portion 11b approaches the vehicle-width-direction inner side from a predetermined location in the lower surface located in an outer left side portion of the rear floor panel 10 in the vehicle width direction, and the left inclined wall portion 11b is connected to a left side portion of the bottom surface portion 11a. Here, the predetermined location corresponds to a location in a front portion of a left side end of the left-side opening portion 12a of the rear floor panel 10 in the vehicle width direction. The right inclined wall portion 11c is inclined downward as the right inclined wall portion 11c approaches the vehicle-width-direction inner side from a predetermined location in the lower surface located in an outer right side portion of the rear floor panel 10 in the vehicle width direction, and the right inclined wall portion 11c is connected to a right side portion of the bottom surface portion 11a. Here, the predetermined location corresponds to a location in a front portion of a right side end of the right-side opening portion 12b of the rear floor panel 10 in the vehicle width direction. The second cross member 45 is disposed along the recessed-shape portion 11.

As shown in Figure 2, the partition portion 13 is provided so as to connect a front portion of the bottom surface portion 11a of the recessed-shape portion 11 and edge portions of the opening portions 12a, 12b on the front side thereof and to partition the opening portions 12a, 12b to the left and the right. In the present embodiment, the right-side opening portion 12b is formed on the right side of the partition portion 13 and the left-side opening portion 12a is formed on the left side of the partition portion 13. The partition portion 13 has a linear portion 13a and an inclined portion 13b. The linear portion 13a is a part that extends to the vehicle rear side from the intermediate portion in the front portion of the bottom surface portion 11a of the recessed-shape portion 11 in the vehicle width direction. The inclined portion 13b is a part that extends to be inclined to the vehicle upper side as the inclined portion 13b approaches the vehicle front side from a front end of the linear portion 13a and that is connected to front edges of the opening portions 12a, 12b. In the present embodiment, as shown in Figure 7, the center member 50 is disposed along the partition portion 13 of the rear floor panel 10.

Next, the left and right side members 20, 30 are described. Each of the left and right side members 20, 30 is a member extending in the vehicle front-rear direction and is a member that is formed of a metal material and has high rigidity. Each of the left and right side members 20, 30 constitutes a frame of the vehicle body. As shown in Figure 1, the left and right side members 20, 30 are disposed to form a pair on both outer sides in the vehicle rear portion in the vehicle width direction thereof.

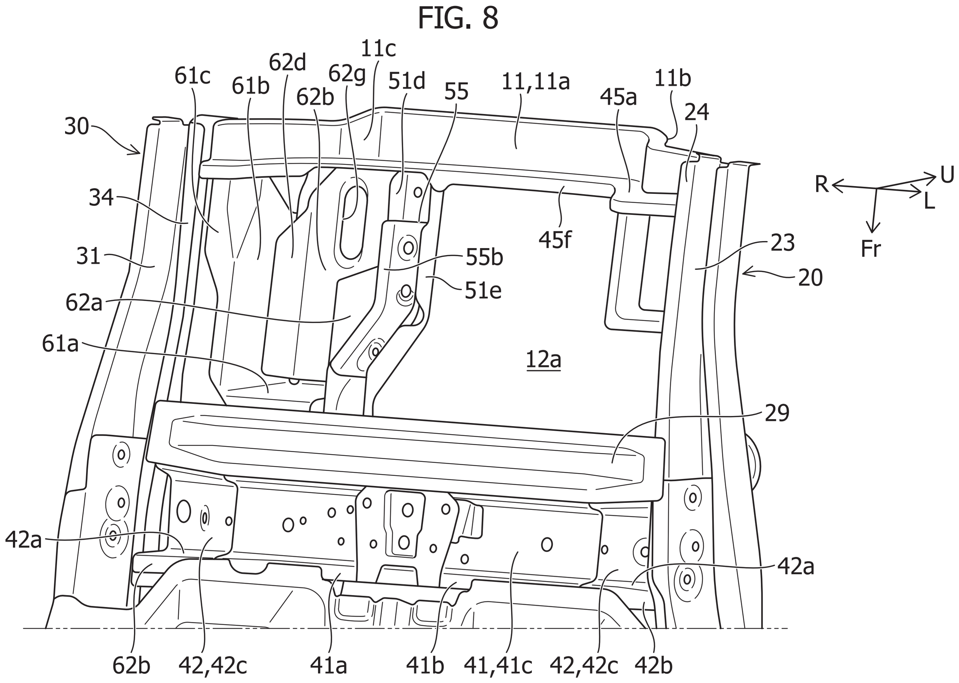

As shown in Figure 1 and Figure 8, the left side member 20 is joined to the outer left side portion in the lower surface of the rear floor panel 10 in the vehicle width direction thereof. The left side member 20 has a lower surface portion 21 extending in the vehicle width direction, an outer wall portion 22 extending from the outer side end of the lower surface portion 21 to the upper side and extending in the vehicle front-rear direction, and an inner wall portion 23 extending from an inner side end of the lower surface portion 21 to the upper side and extending in the vehicle front-rear direction (Figure 8). An upper portion of the outer wall portion 22 is joined to a flange provided on an outer left side end of the rear floor panel 10 by spotwelding. As shown in Figure 8, an inner-side flange 24 protruding to the vehicle-width-direction inner side and extending in the vehicle front-rear direction is provided on an upper end of the inner wall portion 23, and the inner-side flange 24 is joined to the lower surface of the rear floor panel 10 by spotwelding.

The right side member 30 is joined to an outer right side portion in the lower surface of the rear floor panel 10 in the vehicle width direction thereof. As with the left side member 20, the right side member 30 has a lower surface portion 31, an outer wall portion 32, an inner wall portion 33, and an inner-side flange 34. An upper portion of the outer wall portion 32 is joined to a flange provided on an outer right side end of the rear floor panel 10 by spotwelding, and the inner-side flange 34 is joined to the lower surface of the rear floor panel 10 by spotwelding.

Places near joining portions between the first cross member 40 and the left and right side members 20, 30 have high rigidity. Therefore, heavy objects such as rear suspension structure bodies are attached to the lower surface portions 21, 31 of the left and right side members 20, 30 near those joining portions, for example.

As shown in Figure 1 and Figure 8, the first cross member 40 extends in the vehicle width direction so as to connect the left and right side members 20, 30 to each other. The first cross member 40 is joined to a front portion in the lower surface of the rear floor panel 10, and the vehicle-width-direction outer side portions of the first cross member 40 are joined to the left and right side members 20, 30. The first cross member 40 of the present embodiment has a central member 41 extending in the vehicle width direction and outer-side members 42 disposed on both sides of the central member 41 in the vehicle width direction thereof, and those members are integrally configured.

The central member 41 is a member that is disposed on a front portion of the rear floor panel 10 and that extends in the vehicle width direction. The central member 41 has a front wall portion 41a, a rear wall portion, and a lower surface portion 41c. The front wall portion 41a faces the vehicle front side, protrudes to the vehicle lower side from the lower surface of the rear floor panel 10, and extends in the vehicle width direction. The rear wall portion is a wall portion disposed on the vehicle rear side of the front wall portion 41a to be spaced apart therefrom and extends in the vehicle width direction. The lower surface portion 41c connects a lower end of the front wall portion 41a and a lower end of the rear wall portion to each other and extends in the vehicle width direction.

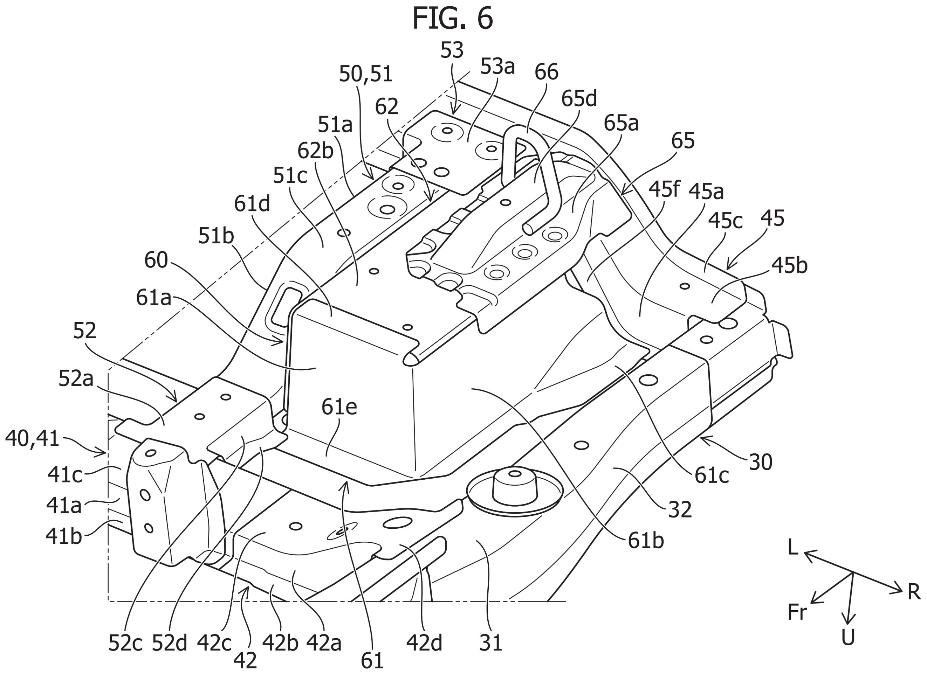

As shown in Figure 6, a front-side flange 41b protruding to the front side is provided on an upper end of the front wall portion 41a, and the front-side flange 41b is joined to a front portion in the lower surface of the rear floor panel 10 by spotwelding. As with the front wall portion 41a, a rear-side flange protruding to the rear side is provided on an upper end of the rear wall portion, and the rear-side flange is joined to the front side of the opening portions 12a, 12b of the rear floor panel 10. The rear-side flange is preferably disposed on the front side relative to front edges of the opening portions 12a, 12b to be spaced apart therefrom. In the present embodiment, a closed sectional structure is configured by the central member 41 and the rear floor panel 10 and rigidity is ensured.

As shown in Figure 1 and Figure 6, the outer-side members 42 are disposed on both sides of the central member 41 in the vehicle width direction thereof and are joined to vehicle-width-direction outer side portions of the central member 41. In this example, as with the central member 41, each outer-side member 42 has a front wall portion 42a, a rear wall portion, and a lower surface portion 42c.

As shown in Figure 6, the front wall portion 42a of the outer-side member 42 is configured as with the front wall portion 41a of the central member 41, and a vehicle-width-direction inner side portion of the front wall portion 42a of the outer-side member 42 is joined to the vehicle-width-direction outer side portion of the front wall portion 41a of the central member 41. A front-side flange 42b is provided on the upper end of the front wall portion 42a, and the front-side flange 42b is joined to the lower surface of the rear floor panel 10. The front-side flange 42b of the outer-side member 42 may be joined to the front-side flange 41b of the central member 41. A vertical flange is provided on the vehicle-width-direction outer side portion of each front wall portion 42a, and the vertical flanges are joined to inner side walls of the left and right side members 20, 30 by spotwelding. A rear wall portion of the outer-side member 42 is configured in a manner similar to the rear wall portion of the central member 41. As with the front wall portion 42a, the rear wall portion is joined to each member.

The lower surface portion 42c of the outer-side member 42 connects a lower end of the front wall portion 42a and a lower end of the rear wall portion to each other and extends in the vehicle width direction. In this example, each lower surface portion 42c extends to be inclined downward as the lower surface portion 42c approaches the vehicle-width-direction outer side from a vehicle-width-direction outer side portion of the lower surface portion 41c of the central member 41, and the lower surface portions 42c are connected to lower surfaces of the left and right side members 20, 30. A vehicle-width-direction inner side portion of the lower surface portion 42c of the outer-side member 42 is joined to the vehicle-width-direction outer side portion of the lower surface portion 41c of the central member 41. A lower-side flange 42d protruding to the vehicle-width-direction outer side is provided on a vehicle-width-direction outer side portion of the lower surface portion 42c of each outer-side member 42, and the lower-side flanges 42d are joined to the lower surface portions 21, 31 of the left and right side members 20, 30 by spotwelding.

As shown in Figure 1 and Figure 6, the second cross member 45 is joined to the rear portion of the rear floor panel 10 by spotwelding. A front wall portion 45a facing the vehicle front side is provided on a front portion of the second cross member 45 and is formed so as to correspond to the recessed-shape portion 11. A front-side flange 45f is provided on an upper end of the front wall portion 45a, and the front-side flange 45f is joined to the recessed-shape portion 11 located in the rear portion of the rear floor panel 10. A lower surface portion 45b extending toward the rear side from a lower end of the front wall portion 45a is formed so as to correspond to the recessed-shape portion 11. A flange 45c protruding to the lower side is provided on a rear end of the lower surface portion 45b of the second cross member 45. The flange is formed so as to correspond to the recessed-shape portion 11. An end panel (not shown) is preferably joined to the flange 45c by spotwelding, for example.

Next, the center member 50 is described. As shown in Figure 1, Figure 3, and Figure 8, the center member 50 of the present embodiment extends in the vehicle front-rear direction so as to bridge over the opening portions 12a, 12b of the rear floor panel 10 and is joined to the first cross member 40 and the second cross member 45.

The center member 50 is a member extending along the vehicle front-rear direction as a whole. As with the left and right side members 20, 30 and the like, the center member 50 is a member formed of a metal material, constituting a vehicle body frame, and having high rigidity. As shown in Figure 1, Figure 3, and Figure 4, the center member 50 of the present embodiment has a member main body 51, a front-side extension member 52 joined to a front portion of the member main body 51, a rear-side extension member 53 joined to a rear portion of the member main body 51, and an inner reinforcement 55 disposed inside the member main body 51.

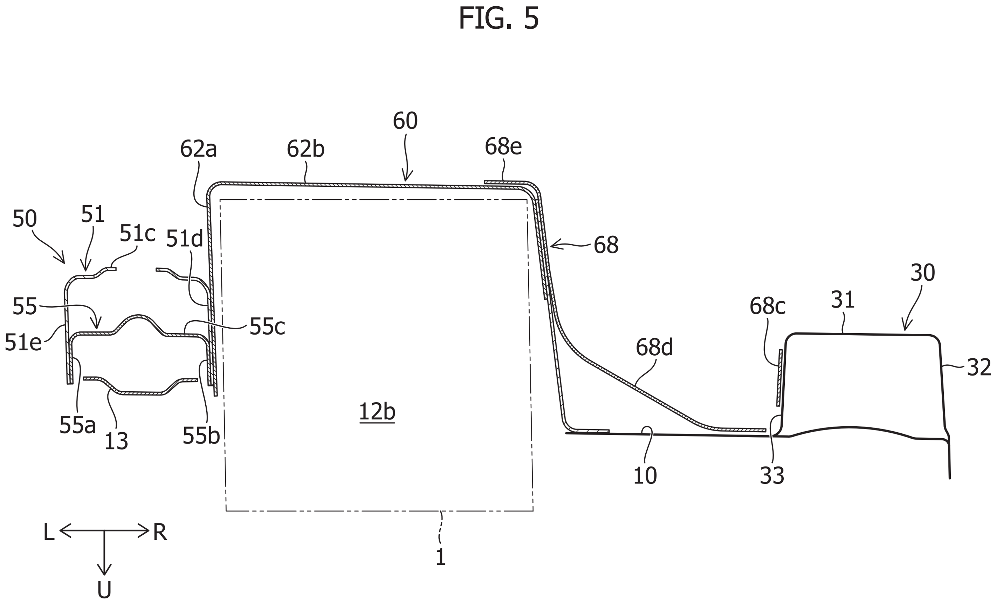

The inner reinforcement 55 is a member that covers a part of the partition portion 13 of the rear floor panel from the lower side and is formed of a metal material. As shown in Figure 5 and Figure 8, the inner reinforcement 55 is formed so as to correspond to the linear portion 13a and the inclined portion 13b of the partition portion 13. The inner reinforcement 55 has a U-like sectional shape opened to the vehicle upper side. An inner wall portion 55a of the inner reinforcement 55 is joined to an inner wall portion 51e of the member main body 51. An outer wall portion 55b of the inner reinforcement 55 is preferably joined to an inner wall portion 62a of the battery tray 60 via an outer wall portion 51d of the member main body 51. A lower surface portion 55c of the inner reinforcement 55 is disposed above a lower surface portion 51c of the member main body 51 to be spaced apart therefrom.

The member main body 51 is a member disposed so as to cover the inner reinforcement 55 from the lower side, and has a linear portion 51a and an inclined portion 51b so as to correspond to the linear portion 13a and the inclined portion 13b of the partition portion 13 as with the inner reinforcement 55. The linear portion 51a is a part linearly extending from the front side of the second cross member 45, and a rear portion of the linear portion 51a is joined to the rear-side extension member 53 and the like. The inclined portion 51b is a part inclined to the upper side as the inclined portion 51b approaches the front side from a front portion of the linear portion 51a, and the linear portion 51a and the inclined portion 51b are integrally formed. A front portion of the inclined portion 51b is joined to the front-side extension member 52 by spotwelding.

As shown in Figure 5, the member main body 51 has a U-like sectional shape opened to the vehicle upper side as with the inner reinforcement 55. The inner wall portion 55a of the inner reinforcement 55 is joined to the inner wall portion 51e of the member main body 51 by spotwelding, and the outer wall portion 55b of the inner reinforcement 55 is joined to the outer wall portion 51d of the member main body 51. The outer wall portion 51d of the member main body 51 is joined to the inner wall portion 62a of the battery tray 60 by spotwelding. In this example, the outer wall portion 55b of the inner reinforcement 55, the outer wall portion 51d of the member main body 51, and the inner wall portion 62a of the battery tray 60 are joined in a three-layered state.

As shown in Figure 3 and Figure 4, the front-side extension member 52 is a member that extends in the vehicle front-rear direction so as to connect the front portion of the inclined portion 51b of the member main body 51 and the central member 41 of the first cross member 40 to each other and is formed of a metal material. A rear portion in a lower surface of the front-side extension member 52 preferably covers a lower surface of the inclined portion 51b of the member main body 51 from the lower side and is preferably joined to a front portion of a lower surface of the inclined portion 51b of the member main body 51 by spotwelding.

A front portion in a lower surface portion 52a of the front-side extension member 52 is joined to the lower surface portion 41c of the central member 41 of the first cross member 40 by spotwelding. A flange 52d is provided on a lower end of each of an inner wall portion 52b and an outer wall portion 52c of the front-side extension member 52, and the flanges 52d are joined to the lower surface of the rear floor panel 10. A vertical flange (not shown) is preferably provided on a front end of each of the inner wall portion 52b and the outer wall portion 52c, and the vertical flanges are preferably joined to the rear wall portion of the central member 41 of the first cross member 40.

As shown in Figure 1, Figure 3, and Figure 4, the rear-side extension member 53 is a member that connects the rear portion of the linear portion 51a of the member main body 51 and the second cross member 45 to each other and that is further joined to a rear portion in a bottom surface portion 62b of the battery tray 60, and is formed of a metal material. A rear portion in the lower surface portion 52a of the front-side extension member 52 preferably covers the lower surface of the inclined portion 51b of the member main body 51 from the lower side and is preferably joined to the front portion of the lower surface of the inclined portion 51b of the member main body 51 by spotwelding.

The rear-side extension member 53 has a lower surface portion 53a, a side wall portion 53b, a vertical wall portion 53c, and an upper surface portion 53d. The lower surface portion 53a is a plate-like part extending in the vehicle front-rear direction and the vehicle width direction. A rear portion in the lower surface portion 53a is joined to the lower surface portion 45b of the second cross member 45. A front portion in the lower surface portion 45b is joined to the lower surface portion 51c of the linear portion 51a of the member main body 51 by spotwelding and is joined to the bottom surface portion 62b of the battery tray 60.

As shown in Figure 3 and Figure 4, the side wall portion 53b is a wall portion extending to the upper side from a front portion in a vehicle-width-direction inner side portion of the lower surface portion 53a and is joined to the linear portion 51a of the member main body 51. The vertical wall portion 53c is a wall portion protruding to the vehicle-width-direction inner side from a rear end of the side wall portion 53b and is joined to the front wall portion 45a of the second cross member 45. The upper surface portion 53d is a surface portion connected to an upper end of the vertical wall portion 53c and an upper end of the side wall portion 53b and is preferably joined to the front-side flange 45f of the second cross member 45 and the rear floor panel 10. It becomes possible to improve the rigidity around the opening portions 12a, 12b of the rear floor panel 10 by providing the center member 50.

Next, the battery tray 60 for fixing the lead battery 1 is described. As shown in Figure 1, as described above, the battery tray 60 is a box-like structure body that is disposed in the right-side opening portion 12b located between the center member 50 and the right side member 30 and that is attached to the center member 50, the second cross member 45, and the rear floor panel 10. The battery tray 60 of the present embodiment has a first member 61 and a second member 62 and constitutes a box-like structure body by the first member 61 and the second member 62.

As shown in Figure 4 and Figure 6, the first member 61 is a member constituting a front wall portion 61a and an outer wall portion 61b of the battery tray 60. The front wall portion 61a of the first member 61 is a wall portion extending to the vehicle lower side from a place near a front edge of the right-side opening portion 12b. An upper-side flange 61e protruding to the front side is provided on an upper end of a front side wall portion of the first member 61 and is joined to the front edge of the right-side opening portion 12b by spotwelding. A lower-side flange 61d protruding to the rear side is provided on a lower end of the front wall portion 61a and is joined to a front portion of the bottom surface portion 62b of the second member 62 by spotwelding.

A rear portion of the outer wall portion 61b of the first member 61 is preferably joined to a vehicle-width-direction outer side portion of the front wall portion 45a of the second cross member 45. As shown in Figure 6, an outer-side flange 61c protruding to the vehicle-width-direction outer side and extending in the vehicle front-rear direction is provided on an upper end of the outer wall portion 61b. The outer-side flange 61c is joined to the lower surface of the rear floor panel 10.

As shown in Figure 3 and Figure 4, the second member 62 is a member constituting the inner wall portion 62a and the bottom surface portion 62b of the battery tray 60. The inner wall portion 62a of the second member 62 is a wall portion disposed on the vehicle-width-direction outer side of the center member 50 and extends to the rear side from an inner side end of the front wall portion 61a. The outer wall portion 51d of the member main body 51 of the center member 50 is joined to the inner wall portion 62a of the second member 62 by spotwelding. The outer wall portion 55b of the inner reinforcement 55, the outer wall portion 51d of the member main body 51, and the inner wall portion 62a of the battery tray 60 may be joined in a three-layered state by spotwelding.

The bottom surface portion 62b is a part extending to the vehicle-width-direction outer side from a lower end of the inner wall portion 62a and is a part on which the lead battery 1 is placed. The lower-side flange 61d of the front wall portion 61a of the first member 61 is joined to a front portion of the bottom surface portion 62b by spotwelding. A towing hook bracket 65 is joined to a rear portion of the bottom surface portion 62b. The towing hook bracket 65 is described later. As shown in Figure 4, a through-hole 62g is provided in the bottom surface portion 62b. As shown in Figure 6, an outer-side flange 62d protruding to the lower side is provided on a vehicle-width-direction outer side portion of the bottom surface portion 62b. The outer-side flange 62d and the outer wall portion 61b of the first member 61 are joined to each other.

In the present embodiment, as shown in Figure 1 and Figure 5, a width-direction reinforcement 68 extending in the vehicle width direction so as to connect the battery tray 60 and the right side member 30 to each other is included. The width-direction reinforcement 68 is a member having a lower surface portion 68d, a front wall portion 68a, and a rear wall portion, formed of a metal material, and having high rigidity. The lower surface portion 68d of the width-direction reinforcement 68 extends to be inclined to the upper side as the lower surface portion 68d approaches the vehicle-width-direction outer side from the bottom surface portion 62b of the battery tray 60. An outer-side flange 68f is provided on a vehicle-width-direction outer side portion of the lower surface portion 68d, and the outer-side flange 68f is joined to the lower surface portion 31 of the right side member 30 by spotwelding. An inner-side flange 68e is provided on a vehicle-width-direction inner side portion of the lower surface portion 68d, and the inner-side flange 68e is joined to a vehicle-width-direction outer side portion in the front portion of the bottom surface portion 62b of the battery tray 60 by spotwelding.

The front wall portion 68a of the width-direction reinforcement 68 extends to the upper side from a front end of the lower surface portion 68d. A front-side flange 68b protruding to the front side is provided on an upper end of the front wall portion 68a and is joined to the rear floor panel 10. An outer-side flange 68c protruding to the front side is provided on a vehicle-width-direction outer side portion of the front wall portion 68a and is joined to the inner wall portion 33 of the right side member 30. A vertical flange joined to the outer wall portion 61b of the battery tray 60 may be provided on the vehicle-width-direction inner side of the front wall portion 68a.

As with the front wall portion 68a, the rear wall portion is joined to the lower surface of the rear floor panel 10, the right side member 30, and the battery tray 60. By providing the width-direction reinforcement 68, the rigidity of the outer wall portion 61b of the battery tray 60 is improved. The rigidity of the rear floor panel 10 near an outer side edge portion of the right-side opening portion 12b is also improved.

In the present embodiment, the electric motor 2 is disposed in the left-side opening portion 12a between the left side member 20 and the center member 50, and the lead battery 1 is disposed in the right-side opening portion 12b between the right side member 30 and the center member 50. In other words, the electric motor 2 is disposed in the left-side opening portion 12a located on the left side of the partition portion 13 and the center member 50. The electric motor 2 is preferably supported by three battery mounts, for example. In this example, a reinforcing bracket 27 is preferably joined to a left-side corner portion formed by the second cross member 45 and the left side member 20, and a mounting bracket on the left side is preferably disposed on the reinforcing bracket 27. A center mounting bracket is preferably disposed on a front-side corner portion formed by the front-side extension member 52 of the center member 50 and the first cross member 40. A mounting bracket on the right side is preferably disposed on the rear-side extension member 53 or the linear portion 51a of the member main body 51 of the center member 50. The electric motor 2 is preferably disposed inside the left-side opening portion 12a via these mounting brackets.

As shown in Figure 5 and Figure 7, the lead battery 1 is disposed inside the battery tray 60 joined to the center member 50 and the second cross member 45. The lead battery 1 has a substantially cuboid shape and has a predetermined weight. A lower portion of the lead battery 1 is preferably fixed to the bottom surface portion 62b by a fastening member such as a bolt.

As in the present embodiment, in the vehicle in which the electric motor 2 is disposed in the vehicle rear portion, by disposing the lead battery 1 that is a heavy object such that the lead battery 1 is adjacent to the electric motor 2, the rigidity of a peripheral structure of the electric motor 2 is improved, and it becomes possible to reduce vibration (for example, noise) and the like generated by the electric motor 2. As a result, vibration transmitted into the vehicle compartment by the driving of the electric motor 2 is reduced.

In the present embodiment, the vehicle-width-direction outer side portion of the battery tray 60 is joined to the side portion of the center member 50, and the rigidity of the inner wall portion 62a of the battery tray 60 is improved. The inner wall portion 62a is a part facing the electric motor 2. Therefore, as a result of the rigidity of the inner wall portion 62a being improved, an effect of reducing vibration around the electric motor 2 can be enhanced.

In the present embodiment, the rear end portion of the center member 50, that is, the rear-side extension member 53 is joined to the second cross member 45 and the battery tray 60. Therefore, the rigidity of parts to which those parts are joined is improved, and the effect of reducing the vibration around the electric motor 2 can be enhanced.

In the present embodiment, as described above, the towing hook bracket 65 on which a towing hook 66 is attached is joined to the bottom surface portion 62b of the battery tray 60. The towing hook bracket 65 has a plate-like joining surface portion 65a extending in the vehicle front-rear direction, and a bulging-out portion 65d that is provided in an intermediate portion of the joining surface portion 65a in the vehicle width direction and that bulges out to the vehicle lower side. The bulging-out portion 65d extends in the vehicle front-rear direction. The towing hook 66 is joined to a side portion of the bulging-out portion 65d by arc welding or the like. The joining surface portion 65a located around the bulging-out portion 65d is joined to the bottom surface portion 62b of the battery tray 60 by spotwelding in this example, the bulging-out portion 65d is disposed so as to close the through-hole 62g provided in the bottom surface portion 62b.

The towing hook bracket 65 is joined to the bottom surface portion 62b of the battery tray 60, and the strength and the rigidity of the bottom surface portion 62b are improved. As a result of the rigidity of the bottom surface portion 62b being improved, the effect of reducing vibration around the electric motor 2 can be enhanced. A load applied to the towing hook 66 when a heavy object such as another vehicle is towed can be effectively dispersed to the vehicle body frame via the towing hook bracket 65.

In the present embodiment, as described above, the towing hook bracket 65 is joined to the bottom surface portion 62b and the outer wall portion 61b (a lower surface and a side surface) of the battery tray 60 and the second cross member 45. Therefore, the rigidity of parts to which those parts are joined is improved, and the effect of reducing the vibration around the electric motor 2 can be enhanced.

In the present embodiment, the width-direction reinforcement 68 joined to the battery tray 60 and the right side member 30 (first side member) is included. By providing the width-direction reinforcement 68, the rigidity of the outer wall portion 61b of the battery tray 60 is improved, and the rigidity of the rear floor panel 10 near the outer side edge portion of the right-side opening portion 12b is also improved. As a result, the effect of reducing the vibration around the electric motor 2 can be enhanced.

In the present embodiment, as shown in Figure 7 and Figure 8, a third cross member 29 is disposed on the vehicle rear side of the first cross member 40 and extends in the vehicle width direction so as to connect the left and right side members 20, 30 to each other. The third cross member 29 and the front-side extension member 52 of the center member 50 (a front end portion of the center member 50) are disposed to overlap in plan view. In this example, the third cross member 29 is joined to a part located on the front side of the opening portions 12a, 12b in the upper surface of the rear floor panel 10. The third cross member 29 is a member formed of a metal material and having high rigidity, and constitutes the vehicle body frame as with the center member 50 and the like. It becomes possible to enhance the rigidity near a front edge portion of the opening portions 12a, 12b by providing the third cross member 29. As a result, the effect of reducing the vibration around the electric motor 2 can be enhanced. It also becomes possible to reinforce the first cross member 40 to which a motor mount is attached.

The description of the present embodiment is an exemplification for describing the present invention and does not limit the invention claimed in the claims. Each configuration of the present invention is not limited to the embodiment described above, and various modifications are possible within the technical scope claimed in the claims.

For example, the electric motor 2 is disposed on the left side and the lead battery 1 is disposed on the right side in the present embodiment, but the present invention is not limited thereto. For example, the electric motor 2 may be disposed on the right side, and the lead battery 1 may be disposed on the left side.

The electric motor 2 is disposed on the inner side of the left-side opening portion 12a, and hence an upper portion of the electric motor 2 is disposed above the rear floor panel 10. Therefore, a cover (not shown) that covers the electric motor 2 from the upper side may be provided. A luggage board (not shown) and the like may be disposed above the electric motor 2.

### [Reference Signs List]

- 1: Lead battery
- 2: Electric motor
- 10: Rear floor panel (floor panel)
- 11: Recessed-shape portion
- 11a: Bottom surface portion
- 11b: Left inclined wall portion
- 11c: Right inclined wall portion
- 12a: Left-side opening portion
- 12b: Right-side opening portion
- 13: Partition portion
- 13a: Linear portion
- 13b: Inclined portion
- 20: Left side member (second side member)
- 21: Lower surface portion
- 22: Outer wall portion
- 23: Inner wall portion
- 24: Inner-side flange
- 27: Reinforcing bracket
- 29: Third cross member
- 30: Right side member (first side member)
- 31: Lower surface portion
- 32: Outer wall portion
- 33: Inner wall portion
- 34: Inner-side flange
- 40: First cross member
- 41: Central member
- 41a: Front wall portion
- 41b: Front-side flange
- 41c: Lower surface portion
- 42: Outer-side member
- 42a: Front wall portion
- 42b: Front-side flange
- 42c: Lower surface portion
- 45: Second cross member
- 45a: Front wall portion
- 45b: Lower surface portion
- 45c: Flange
- 50: Center member
- 51: Member main body
- 51a: Linear portion
- 51b: Inclined portion
- 51c: Lower surface portion
- 51d: Outer wall portion
- 51e: Inner wall portion
- 52: Front-side extension member
- 52a: Lower surface portion
- 52b: Inner wall portion
- 52c: Outer wall portion
- 52d: Flange
- 53: Rear-side extension member
- 53a: Lower surface portion
- 53b: Side wall portion
- 53c: Vertical wall portion
- 53d: Upper surface portion
- 55: Inner reinforcement
- 55a: Inner wall portion
- 55b: Outer wall portion
- 55c: Lower surface portion
- 60: Battery tray
- 61: First member
- 61a: Front wall portion
- 61b: Outer wall portion
- 61c: Outer-side flange
- 61d: Lower-side flange
- 61e: Upper-side flange
- 62: Second member
- 62a: Inner wall portion
- 62b: Bottom surface portion
- 62d: Outer-side flange
- 65: Towing hook bracket
- 65a: Joining surface portion
- 65d: Bulging-out portion
- 66: Towing hook
- 68: Width-direction reinforcement
- 68a: Front wall portion
- 68b: Front-side flange
- 68c: Outer-side flange
- 68d: Lower surface portion
- 68e: Inner-side flange
- 68f: Outer-side flange

## Claims

1. A vehicle rear structure comprising:
a floor panel disposed in a vehicle rear portion;
a first side member and a second side member disposed so as to form a pair on both of vehicle-width-direction side portions of the floor panel and extending in a vehicle front-rear direction;
a first cross member extending in a vehicle width direction so as to connect the first side member and the second side member to each other; and
a second cross member disposed on a vehicle rear side of the first cross member and extending in the vehicle width direction so as to connect the first side member and the second side member to each other, **characterized in that**:
an opening portion is provided in the floor panel surrounded by the first side member, the second side member, the first cross member, and the second cross member;
a center member extending in the vehicle front-rear direction so as to bridge over the opening portion and joined to the first cross member and the second cross member is included;
a lead battery is disposed in the opening portion between the first side member and the center member; and
an electric motor is disposed in the opening portion between the second side member and the center member.

2. The vehicle rear structure according to claim 1, wherein:
a battery tray on which the lead battery is placeable is disposed in the opening portion located between the first side member and the center member; and
a vehicle-width-direction inner side portion of the battery tray is joined to a side portion of the center member.

3. The vehicle rear structure according to claim 1 or 2, wherein a rear end portion of the center member is joined to the second cross member and the battery tray.

4. The vehicle rear structure according to claim 2, wherein a towing hook bracket on which a towing hook is attached is joined to a lower surface of the battery tray.

5. The vehicle rear structure according to claim 4, wherein the towing hook bracket is joined to a lower surface and a side surface of the battery tray and to the second cross member.

6. The vehicle rear structure according to claim 2, wherein a width-direction reinforcement joined to the battery tray and the first side member is included.

7. The vehicle rear structure according to claim 1, wherein:
a third cross member disposed on the vehicle rear side of the first cross member and extending in the vehicle width direction so as to connect the first side member and the second side member to each other is included; and
the third cross member and a front end portion of the center member are disposed so as to overlap in plan view.
